(19) Europäisches Patentamt

European Patent Office

Office européen des brevets

(11) **EP 1 805 224 B1**

(12) **EUROPEAN PATENT SPECIFICATION**

(45) Date of publication and mention
of the grant of the patent:
**16.02.2011 Bulletin 2011/07**

(21) Application number: **05801739.3**

(22) Date of filing: **24.10.2005**

(51) Int Cl.:
*C08F 4/00* (2006.01)

(86) International application number:
**PCT/EP2005/055474**

(87) International publication number:
**WO 2006/045762 (04.05.2006 Gazette 2006/18)**

(54) **CATALYST COMPONENT COMPRISING THREE OR MORE BRIDGED BISINDENYL METALLOCENE COMPONENTS**

KATALYSATORKOMPONENTE MIT DREI ODER MEHR VERBRÜCKTEN BISINDENYLMETALLOCENKOMPONENTEN

COMPOSANT CATALYTIQUE COMPRENANT AU MOINS TROIS COMPOSÉS MÉTALLOCÈNES BISINDÉNYL PONTÉS

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.10.2004 EP 04105287**

(43) Date of publication of application:
**11.07.2007 Bulletin 2007/28**

(73) Proprietor: **TOTAL PETROCHEMICALS RESEARCH FELUY**
**B-7181 Seneffe (Feluy) (BE)**

(72) Inventor: **RAZAVI, Abbas**
**B-7000 Mons (BE)**

(74) Representative: **Leyder, Francis**
**Total Petrochemicals Research Feluy**
**Zone Industrielle C**
**7181 Seneffe (Feluy) (BE)**

(56) References cited:
**EP-A- 0 645 401    US-A- 5 714 427**

**Description**

The present invention discloses metallocene catalyst sytems comprising several types of indenyl or pseudo-indenyl catalyst components. It also discloses their use in the polymerisation of alpha-olefins.

In many applications in which polyolefins are employed, it is desirable that the polyolefin used has good mechanical properties. It is known that, in general, high molecular weight polyolefins have good mechanical properties. Additionally, since the polyolefin must usually undergo some form of processing, such as moulding processes and extrusion processes and the like, to form the final product, it is also desirable that the polyolefin used has good processing properties. However, unlike the mechanical properties of the polyolefin, its processing properties tend to improve as its molecular weight decreases.

Polymers having good optical properties, such as high transparency combined with good processing were typically low density polyethylene (LDPE) resins prepared by radical initiated polymerisation reaction. These polymers were prepared under severe conditions of very high pressure, typically larger than 1000 bars and up to 3000 bars, and of high temperature, typically larger than 200 °C. This process was not environmentally friendly as it released unconsumed monomers into the atmosphere. The polymer exiting the reactor was in a molten state and included monomers that were subsequently released in the environment. In addition, the products did not have excellent mechanical properties. It was also difficult to control the molecular weight and the molecular weight distribution as the polymerisation was initiated with oxygen and/or peroxides.

Ethylene-based copolymers produced using metallocene catalysts were introduced to the marketplace over a decade ago, first by Exxon Chemical Company followed closely by The Dow Chemical Company. These copolymers had densities of at most 0.910 g/cm$^3$. Very low density polyethylene (VLDPE) resins and ultra-low density polyethylene (ULDPE) resins produced by conventional methods were available on the market such as for examples Union Carbide's Flexomer® and Mitsui's Tafmer® product lines. Metallocene-based ethylene copolymers were however sufficiently novel to capture novel end-use applications.

Ethylene-based copolymers having densities higher than 0.910 g/cm$^3$ were progressively introduced on the market such as for example Dow's octene-based linear low density polyethylene (LLDPE) and Exxon's butene- and hexene-based LLDPE. As production of metallocene-based LLDPE (mLLDPE) was ramped up in the mid- to late 90s, the premium commanded by these products decreased compared to conventionally produced LLDPE. The mechanical, physical, and optical properties of mLLDPE were far superior to those of conventional LLDPE and low density polyethylene (LDPE). Its processability on available equipment was however very poor in comparison to that of conventional LDPE. Resin producers and manufacturers of processing equipment, especially blown-film equipment, worked simultaneously to address the problem of the difficult processability of metallocene-based polyethylene as compared to the very easy processing of classical LDPE.

US-A-5714427 discloses catalyst systems comprising a mixture of 2 metallocene components that are suitable for the polymerisation of ethylene and alpha-olefins.

Polyethylene is an inexpensive material that can be processed and moulded into myriads of shapes with the desired mechanical and optical properties for numerous end uses. It has a useful balance of physical, mechanical, and optical properties, all of which are a function of polymer structure. Polymer structure depends upon the catalyst system and the process technology that are used to produce the polymer.

The properties that have an impact on processability and mechanical properties of polyethylene are:

- molecular weight
- molecular weight distribution
- molecular architecture, specifically branching, both short-chain branching (SCB) and long-chain branching (LCB). For SCB, both the level of SCB as well as the distribution of SCB are important for determining the rheological and end-use properties of the polyethylene resin.

The molecular weight of a polymer has an impact on its hardness, durability or strength. Polymers including polyethylene comprise short chains, long chains, and chain lengths in between, each with a different molecular weight. An average molecular weight can be calculated, but by itself this number is virtually meaningless. It is preferable to characterize polymers in terms of the distribution of the chain lengths and hence in terms of molecular weight distribution. Quantitatively, molecular weight distribution is described by the polydispersity index, PDI. It is the ratio Mw/Mn of the weight average molecular weight Mw to the number average molecular weight Mn.

The MWD of LDPE, conventional LLDPE, and metallocene-based LLDPE differ markedly. The MWD of LDPE is typically broad of from 5 to 15, that of conventional LLDPE ranges between 4 and 6, and that of mLLDPE is of less than 4.

The primary difference between LDPE and conventional or metallocene-based LLDPE is in type degree and distribution of branching, both SCB and LCB.

During the production of LDPE, SCB form via the back-biting mechanism. Mostly ethyl and butyl branches are formed. The short chains are distributed evenly along every chain. Typical SCB density in LDPE is of from 10 to 30 SCB/1000 backbone carbon atoms. The regular SCB distribution results in excellent optical properties and a low melting point.

Type and degree of short-chain branching in linear polyethylene made using coordination catalysts are determined by the type and level of added comonomer. Butene-1, hexene-1, or octene-1 are the usual comonomers, resulting in formation of ethyl, butyl, or hexyl branches, respectively.

Catalyst type determines the distribution of SCB. A conventional LLDPE with a density of 0.918 g/cm$^3$ has an average of 13-15 side branches/1000 carbons that are randomly distributed. There is inter-chain heterogeneity, with some chains have more SCB than others. Intra-chain SCB is a function of molecular weight: the higher the molecular weight, the lower the frequency of SCB. As a consequence of SCB variability, the optical properties are poor.

One of the key features of metallocene catalysts is their ability to incorporate comonomer uniformly both intra- and inter-molecularly. Thus mLLDPE has a uniform comonomer distribution that is independent of molecular weight, resulting in excellent optical properties.

During the production of LDPE long-chain branches (LCB) form via chain transfer. A long-chain free radical can abstract a hydrogen atom from the backbone of a nearby chain, leaving a free radical in the interior of the chain which reacts with nearby ethylene molecules to form a very long branch, sometimes referred to as a T-junction. Sufficient LCB results in formation of a polymer network. Typically there are 15 long-chain branches/1000 carbon atoms in LDPE and 10 to 50 branch points. These branch points function as permanent cross-links, thereby resulting in the high melt strength of LDPE due to frequent polymer-chain entanglements, of great benefit in extrusion processes such as blown film and extrusion coating. Reactor type also determines the extent of LCB in LDPE. Two types of reactor can be used: autoclave or tubular. In general LDPE produced in an autoclave reactor has a more complex, multi-branched structure than that produced in a tubular reactor. More LCB results in low intrinsic viscosity.

The disadvantage of LLDPE is that there is essentially no LCB in conventional LLDPE and no or very little LCB in mLLDPE. As a consequence, extrusion of LLDPE produced with any type of coordination catalyst is very difficult on equipment designed for extruding LDPE.

The disadvantage of LDPE is that, the use of peroxides to initiate the polymerisation of LDPE resulted in residual contamination within the polymers. The polymers produced did not have optimal transparency and processing properties:

- the processing capabilities were reduced by long chain branching;
- the crystallinity was reduced by the short chain branching formed during polymerisation by the mechanism of back-biting.

There is thus a need to improve the processing capabilities of mLLDPE and thus to prepare resins that would combine the good physical, mechanical and optical properties of single-site catalyst system and the good processability of classical LDPE resins.

To obtain the best balance of mechanical and processing properties, polyolefins must have both a high molecular weight (HMW) component and a low molecular weight (LMW) component: such polyolefins have either a broad molecular weight distibution (MWD), or a multi-modal molecular weight distribution. There are several methods for the production of polyolefins having a broad or multimodal molecular weight distribution. The individual polyolefins can be melt blended, or can be formed in separate reactors in series. Use of a dual site catalyst for the production of a bimodal polyolefin resin in a single reactor is also known.

Chromium-based catalysts for use in polyolefin production also tend to broaden the molecular weight distribution and can, in some cases, produce bimodal molecular weight distribution, but usually the low molecular part of these resins contains a substantial amount of the co-monomer. Whilst a broadened molecular weight distribution provides acceptable processing properties, a bimodal molecular weight distribution can provide excellent properties.

Ziegler-Natta catalysts are known to be capable of producing bimodal polyethylene using two reactors in series. Typically, in a first reactor, a low molecular weight homopolymer is formed by reaction between hydrogen and ethylene in the presence of the Ziegler-Natta catalyst. It is essential that excess hydrogen be used in this process and, as a result, it is necessary to remove all the hydrogen from the first reactor before the products are passed to the second reactor. In the second reactor, a copolymer of ethylene and hexene is made in order to produce a high molecular weight polyethylene.

Metallocene catalysts are also known in the production of polyolefins. For example, EP-A-0619325 describes a process for preparing polyolefins having a bimodal molecular weight distribution. In this process, a catalyst system that includes two metallocenes is employed. The metallocenes used are, for example, a bis(cyclopentadienyl) zirconium dichloride and an ethylene-bis(indenyl) zirconium dichloride. By using the two different metallocene catalysts in the same reactor, a molecular weight distribution is obtained, which is at least bimodal. As for Ziegler-Natta catalysts, it is also possible to use a single metallocene catalyst system in two serially connected loop reactors operated under different polymerising conditions.

EP-A-0645401 discloses that polyolefins having a molecular mass distribution Mw/Mn ≥ 3, which can be monomodal, bimodal or multimodal, can be obtained by polymerization or copolymerization of olefins in presence of a catalyst system comprising at least one bridged bis-indenyl zirconocene.

A problem with known bimodal polyolefins is that if the individual polyolefin components are too different in molecular weight and density, they may not be as miscible with each other as desired and harsh extrusion conditions or repeated extrusions are necessary which might lead to partial degradation of the final product and/or additional cost. The optimum mechanical, optical and processing properties are thus not achieved in the final polyolefin product.

There is thus a need to prepare LDPE-like polymer resins having controlled molecular weight distribution and controlled long chain branching as well as good optical properties and that do not require severe polymerisation conditions of high temperature and high pressure.

## List of Figures.

Figure 1 represents the structure of a typical bisindenyl metallocene catalyst component.

Figure 2 represents the structure of a typical bistetrahydroindenyl metallocene catalyst component.

Figure 3 represents respectively a composite molecular weight distribution wherein the mono-substituted catalyst component is dominant (3a), a composite molecular weight distribution wherein the unsubstituted catalyst component is dominant (3b), and a composite molecular weight distribution wherein the multi-substituted catalyst component is dominant.

It is an aim of the present invention to prepare a catalyst system that polymerises ethylene or alpha-olefins under mild conditions of temperature and pressure.

It is also an aim of the present invention to prepare a catalyst system for the production of polymers with controlled molecular weight distribution.

It is another aim of the present invention to prepare a catalyst system for the production of polymers with controlled long and short chain branching.

It is a further aim of the present invention to prepare a catalyst system for the production of polymers with good optical properties.

It is yet another aim of the present invention to prepare a catalyst system for the production of polymers that are easy to process.

Accordingly, the present invention discloses a catalyst component that comprises three or more bridged bisindenyl metallocene components that are structurally slightly different in that they have different substitution patterns. They are represented by formula I

$$R'' (THI)_2MQ_2 + R'' (THI)'_2MQ_2 + R'' (THI)''_2MQ_2 +..... \quad (I)$$

wherein THI represents an unsubstituted indenyl or tetrahydro-indenyl, THI' represents a mono substituted indenyl or tetrahydro-indenyl and THI" represents a di- substituted indenyl or tetrahydro-indenyl R" is a structural bridge between two cyclopentadienyl rings imparting rigidity to the component, M is a metal group 4 of the Periodic Table (Handbook of Chemistry, 76th edition) and each Q is the same or different and may be a hydrocarbyl or hydrocarboxy radical having 1-20 carbon atoms or a halogen.

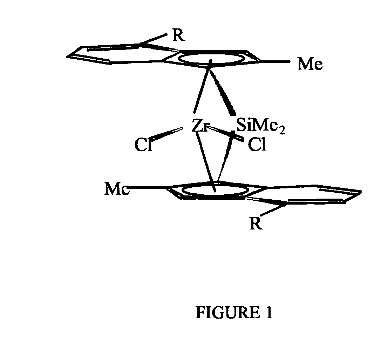

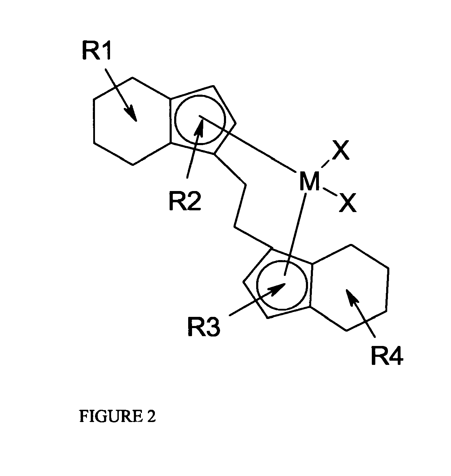

In this invention, THI', THI" ... must be differently substituted from one another, either by the nature of the substituents or by the position of the substituents. Typical bis- or bis-tetrahydro-indenyl structures are represented in Figures 1 and 2.

Each substituent group on the indenyl or tetrahydro-indenyls THI" and THI" may be independently chosen from those of formula $XR_v$ in which X is chosen from group 14, oxygen and nitrogen and each R is the same or different and chosen from hydrogen or hydrocarbyl of from 1 to 20 carbon atoms and v+1 is the valence of X. X is preferably C. If the cyclopentadienyl ring is substituted, its substituent groups must not be so bulky as to affect coordination of the olefin monomer to the metal M. Substituents on the cyclopentadienyl ring preferably have R as hydrogen or $CH_3$.

Preferably, THI' is mono-substituted with an alkyl or aryl group and both THI' have the same substitution pattern. More preferably the substituent on each THI' is at position 2 and is selected from methyl, tert-butyl, phenyl, or naphtyl.

Preferably THI" is di-substituted with alkyl or aryl groups and both THI" have the same substitution pattern. More preferably the substituents on each THI" are at positions 2 and 4 and are selected from methyl, tert-butyl, phenyl, or naphtyl.

Preferably, the bridge R" that is a methylene or ethylene or silyl bridge either substituted or unsubstituted or a diphenyl bridge.

The metal M is preferably the same for all components and is selected from zirconium, hafnium or titanium, most preferably zirconium.

Suitable hydrocarbyls for Q include aryl, alkyl, alkenyl, alkylaryl or aryl alkyl. Each Q is preferably halogen.

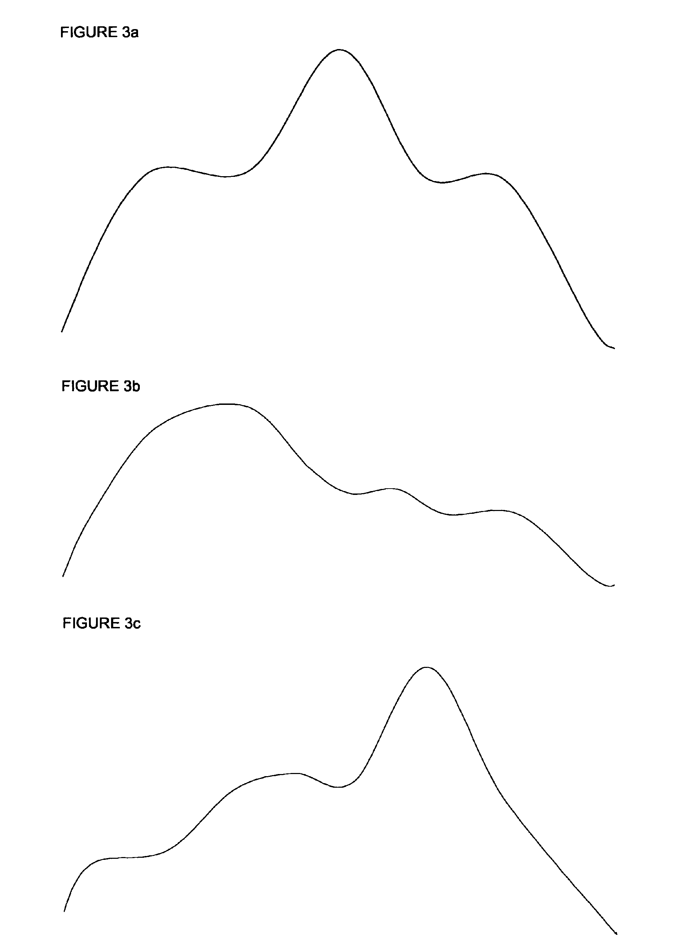

The respective amounts of each metallocene component are not particularly limited and depend upon the desired properties of the final polymers. When good mechanical properties are needed, the high molecular weight component is essential and the catalyst components having a large number of substituents is favoured: a typical composite molecular weight distribution of such resin is represented in Figure 3c. When good processing is preferred, the low molecular weight component is needed and the catalyst component without substituents is favoured: a typical composite molecular weight distribution of such resin is represented in Figure 3b. When a good balance of mechanical and processing properties is preferred, all catalyst components are equally represented.

The metallocene catalyst component used in the present invention can be prepared by any known method. A preferred preparation method for preparing the bis- or bis-tetrahydro-indenyl component is described in J. Org. Chem. 288, 63-67 (1985).

An active catalyst system is prepared by combining the three or more bis-tetrahydroindenyl catalyst components with a suitable activating agent.

The activating agent used to activate the metallocene catalyst component can be any activating agent having an ionising action known for this purpose such as aluminium-containing or boron-containing compounds. The aluminium-containing compounds comprise alumoxane, alkyl aluminium and/or Lewis acid.

The alumoxanes are well known and preferably comprise oligomeric linear and/or cyclic alkyl alumoxanes represented by the formula:

$$\text{(III)} \quad R-(A1-O)_n-A1R2$$
$$|$$
$$R$$

for oligomeric, linear alumoxanes and

$$\text{(IV)} \quad (-A1-O-)_m$$
$$|$$
$$R$$

for oligomeric, cyclic alumoxane,

wherein n is 1-40, preferably 10-20, m is 3-40, preferably 3-20 and R is a $C_1$-$C_8$ alkyl group and preferably methyl.

Suitable boron-containing cocatalysts may comprise a triphenylcarbenium boronate such as tetrakis-pentafluorophenyl-borato-triphenylcarbenium as described in EP-A-0427696, or those of the general formula [L'-H] + [B $Ar_1$ $Ar_2$ $X_3$ $X_4$]- as described in EP-A-0277004 (page 6, line 30 to page 7, line 7).

Optionally, the catalyst components can be supported on the same or on separate supports. Preferred supports include a porous solid support such as talc, inorganic oxides and resinous support materials such as polyolefin. Preferably, the support material is an inorganic oxide in its finely divided form.

Suitable inorganic oxide materials are well known in the art. Preferably, the support is a silica support having a surface area of from 200-700 $m^2$/g and a pore volume of from 0.5-3 ml/g.

Alternatively, an activating support may be used, thereby suppressing the need for an activating agent.

The amount of activating agent and metallocene usefully employed in the preparation of the solid support catalyst can vary over a wide range and depend upon the nature of the activating agent.

The active catalyst system of the present invention is used for the polymerisation of alpha-olefins. It is particularly useful for the preparation of polyethylene or isotactic polypropylene.

The present invention also discloses a method for polymerising ethylene or alpha-olefins that comprises the steps of:

a) injecting into a reactor a composite active catalyst system comprising several bridged bis-tetrahydroindenyl components having different substitution patterns and a suitable activating agent;
b) injecting a monomer and optional comonomer into the reactor;
c) maintaining under polymerisation conditions;
d) retrieving a polymer having a broad molecular weight distribution.

Preferably the monomer is ethylene or propylene.

The comonomer can be created in situ by adding an oligomerisation catalyst component.

In a particularly preferred embodiment of the present method, polymerisation takes place in a single reaction zone, under polymerising conditions in which the catalysts producing the polymer components are simultaneously active.

Many known procedures for forming multimodal polyolefins have employed a different reactor for forming each component. The methods of the present invention are particularly advantageous, since they allow for the production of improved olefin polymers from a single reactor. This is because the catalysts employed in the present invention are more effective than known catalysts, particularly when utilised simultaneously in the same reactor. This has two distinct advantages. Firstly, since only a single reactor is required, production costs are reduced. Secondly, since the components are all formed simultaneously, they are much more homogeneously blended than when produced separately.

Although polymerisation in a single reactor is particularly preferred, the catalysts employed in the present invention are still effective in producing the required polyolefin components of a multimodal product even when these components are produced in separate reactors. Accordingly, in some embodiments, separate reactors may be employed for forming some or all of the components, if desired

Each of the three or more bis- or bis-tetrahydro-indenyl catalyst components produces a polymer having a narrow molecular weight distribution, each molecular weight distribution being slightly different than the two or more others. The resulting resin thus has a final molecular distribution that is the superposition of three or more narrow molecular weight distributions slightly displaced with respect to one another. Without wishing to be bound by theory, it is believed that the fraction of high molecular weight component in the molecular weight distribution increases with the number of substituents on the THI. A typical composite molecular weight distribution is represented in Figure 3 that represents the superposition of molecular weight distributions for a catalyst system comprising three bridged bis-tetrahydro--indenyl components, the left one having no substituent, the middle one being substituted with a methyl group at position 2, the right one being substituted with two methyl groups, respectively in positions 2 and 4. The exact shape of the molecular weight distribution is a function of the amount of each metallocene component: for example, in Figure 3a, the indenyl component having one substituent is predominant, whereas in Figure 3b, the unsubstituted indenyl component is predominant and in Figure 3c, the di-substituted indenyl component is in major amount. It is further possible to play on the number and nature of the substituents to modify the properties of the final polymer.

The final molecular weight distribution is in the range of 5 to 8, preferably of from 6 to 7, whereas each individual component has a polydispersity of from 2.5 to 4.

The polyethylene obtained with the catalyst composition according to the present invention typically have a density ranging from 0.910 to 0.930 g/cm$^3$ and a melt index ranging from 0.1 to 30 dg/min. Density is measured following the method of standard test ASTM 1505 at a temperature of 23°C and melt index MI2 is measured following the method of standard test ASTM D 1238 at a temperature of 190°C and under a load of 2.16 kg.

The resins of the present invention can be used in the applications of classical LDPE obtained with peroxide.

The important structural attributes of polyethylene include molecular weight, molecular weight distribution, degree and type of branching, comonomer distribution (compositional distribution), and degree of crystallinity.

The physical properties of polyethylene include density, melting temperature, crystallisation temperature, heat-deflection temperature, glass-transition temperature, moisture and gas permeability, and other electrical and thermal properties.

The mechanical properties of polyethylene include tensile properties such as for example strength, modulus, tensile strength at yield, ultimate tensile strength, flexural properties such as strength and modulus, elongation properties such as elongation at yield and elongation at break, tear strength, stiffness, hardness, brittleness, impact resistance, puncture resistance, and environmental stress crack resistance (ESCR).

The optical properties of polyethylene include clarity, haze, gloss, and colour.

The rheological properties of polyethylenes include melt strength, intrinsic viscosity, shear viscosity, and extensional viscosity.

These properties vary with molecular weight, density, and molecular weight distribution as summarised in Table I.

### TABLE I.

|  | Increases | Decreases |
|---|---|---|
| Increasing Density | stiffness,<br>tensile strength at yield,<br>melting point,<br>hardness,<br>abrasion resistance,<br>chemical resistance,<br>gloss. | ESCR,<br>impact strength,<br>haze,<br>gas permeability. |
| Increasing molecular weight | stiffness,<br>tensile strength at yield,<br>impact strength,<br>hardness,<br>abrasion resistance,<br>chemical resistance,<br>ESCR,<br>melt strength,<br>haze. | gloss,<br>gas permeability. |

As density increases so does crystallinity, so it is the degree of crystallinity that actually determines these properties.

The molecular weight distribution also influences the physical properties of a polyethylene. For example, at equivalent molecular weight, a polyethylene with a narrow MWD is tougher than a polyethylene with a broad MWD. mLLDPE makes therefore a tougher film than a conventional LLDPE having the same molecular weight and density. The MWD has also an effect on the organoleptic properties of a resin because the low molecular weight components are volatile and extractable.

More importantly, the MWD has an effect on the processability of the resin.

Major polyethylene processing operations include extrusion, injection moulding, blow moulding, and rotational moulding, each requiring different resin properties.

- In extrusion, molten polymer is continuously forced through a shaped die then drawn onto take-off equipment as it cools. Pipes, fibres, blown-film or cast-film, sheets, coating for wire, cables, or paper are extruded in this manner. Extrusion processes require resins with some degree of melt strength.
- In injection moulding, molten polymer is injected at very high pressure into a mould where the polymer solidifies, replicating the shape of the mould. Resins suitable for injection moulding must have low melt viscosity in order for the mould to be filled quickly and completely. Typically, they have a narrow MWD and a high melt index. The melt index is determined using the method of standard test ASTM D 1238, at a temperature of 190°C for polyethylene and under a the load of 2.16 kg for MI2 and 21.6 kg for HLMI
- In blow moulding, thin-walled hollow parts are formed, such as for example bottles or large articles such as drums or asymmetric articles such as automotive fuel tanks. Blow-moulding resins require high melt strength in order to avoid sagging or shearing away during processing. Blow-moulding resins typically have a broad MWD and a low melt index, usually MI2 is less than 1 dg/min and HLMI is less than 10 dg/min.
- In rotational moulding, finely divided polymer powder is poured into a mould that is then heated to over 300°C and slowly rotated. As the mould rotates the polymer melts and coats the inside walls of the mould uniformly. Rotational moulding is a low-shear process suitable for producing large, irregularly-shaped objects.

LDPE and LLDPE resins are used mainly to prepare various types of film. The LDPE-like resins such as prepared in the present invention are principally used in film applications. Other applications may include paper extrusion-coating.

The LDPE-like resins according to the present invention have an improved rheological behaviour when compared to conventional LDPE. Improvements include for example the good bubble stability of LDPE plus the draw down property of LLDPE without concomitant melt fracture.

Conventional LDPE has a very broad MWD, wherein the lower molecular weight fraction enhances processability whereas the higher molecular weight fraction enhances mechanical properties. In addition the extensive LCB present in LDPE lends very large melt strength. Branching, both SCB and LCB, lowers the crystallinity of solid LDPE which, combined with its homogeneous inter- and intramolecular branching frequency, makes it a very clear resin. Thus LDPE is noted for its easy processing, particularly in blown film and extrusion coating, and excellent optical properties. The low crystallinity of LDPE means however mediocre puncture resistance, tensile strength, and tear strength. In addition, in processing, the draw down of LDPE is poor. It is thus difficult to down-gauge LDPE film and thus to prepare very thin final articles. The LDPE-like resins prepared according to the present invention do not exhibit these drawbacks: they have excellent down-gauging capability and good tensile and tear strength as well as excellent resistance to puncture.

**Claims**

1.  A catalyst component comprising three or more bridged bisindenyl metallocene components that are structurally slightly different in that they have different substitution patterns and represented by formula I

$$R'' (THI)_2MQ_2 + R'' (THI')_2MQ_2 + R'' (THI'')_2MQ_2 + ..... \quad (I)$$

    wherein THI represents an unsubstituted indenyl or tetrahydro-indenyl, THI' represents a mono-substituted indenyl or tetrahydro-indenyl, THI'' represents a di-substituted indenyl or tetrahydro-indenyl, R'' is a structural bridge between two cyclopentadienyl rings imparting rigidity to the component, M is a metal group 4 of the Periodic Table (Handbook of Chemistry, 76th edition) and each Q is the same or different and may be a hydrocarbyl or hydrocarboxy radical having 1-20 carbon atoms or a halogen.

2.  The catalyst component according to claim 1 wherein each substituent group on the indenyls or tetrahydro-indenyls THI' and THI'' is independently chosen from those of formula $XR_v$ in which X is chosen from group 14, oxygen and nitrogen and each R is the same or different and chosen from hydrogen or hydrocarbyl of from 1 to 20 carbon atoms and v+1 is the valence of X.

3.  The catalyst component according to claim 1 wherein both THI' are substituted at posistion 2 with the same substituent selected from methyl, tert-butyl, phenyl or naphtyl.

4.  The catalyst component according to claim 1 or claim 3 wherein both THI'' are substituted at positions 2 and 4 with substituents selected from two methyls, two tert-butyls, two phenyls or two naphtyls.

5.  An active catalyst system comprising the catalyst component of any one of claims 1 to 4 and an activating agent or an activating support.

6.  The active catalyst system of claim 5 wherein the activating agent is aluminoxane

7.  A method for preparing an active catalyst system comprising the steps of;

    a) providing a catalyst component comprising the three or more bridged bis- or bis-tetrahydro-indenyl metallocene catalyst components according to any one of claims 1 to 4;
    b) providing an activating agent having an ionising action or an activating support.

8.  A method for homo- or co-polymerising ethylene or alpha-olefins that comprises the steps of:

    a) injecting the active catalyst system of claim 5 or claim 6 into the reactor;
    b) injecting a monomer and an optional comonomer into the reactor;
    c) maintaining under polymerisation conditions;
    d) retrieving a polymer.

9.  The method of claim 8 wherein the monomer is ethylene or propylene.

10. Use of the catalyst system of claim 5 or claim 6 to prepare a polymer having good optical and mechanical properties that is easy to process.

**Patentansprüche**

1. Katalysatorkomponente, umfassend drei oder mehrere gebrückte Bisindenyl-Metallocen-Komponenten, die sich in ihrer Struktur geringfügig dahingehend unterscheiden, dass sie unterschiedliche Substitutionsmuster aufweisen, repräsentiert durch die Formel I:

$$R'' \ (THI)_2 MQ_2 \ + \ R'' \ (THI')_2 MQ_2 \ + \ R'' \ (THI'')_2 MQ_2 \ + \ (I)$$

wobei THI ein nicht substituiertes Indenyl oder Tetrahydro-Indenyl repräsentiert, THI' ein monosubstituiertes Indenyl oder Tetrahydro-Indenyl repräsentiert, THI" ein disubstituiertes Indenyl oder Tetrahydro-Indenyl repräsentiert, R'' eine Strukturbrücke zwischen zwei Cyclopentadienyl-Ringen ist, die der Komponente Rigidität verleiht, M eine metallische Gruppe 4 des Periodensystems ist (Handbook of Chemistry, 76. Ausgabe), und Q jeweils gleich oder unterschiedlich ist und ein Hydrocarbyl- oder Hydrocarboxy-Radikal mit 1 bis 20 Kohlenstoffatomen oder ein Halogen sein kann.

2. Katalysatorkomponente nach Anspruch 1, wobei jede Substituentengruppe an den Indenylen oder Tetrahydro-Indenylen THI' und THI'' unabhängig aus jenen der Formel $XR_v$ ausgewählt sind, wobei X aus der Gruppe 14, Sauerstoff und Stickstoff ausgewählt ist, und R jeweils gleich oder unterschiedlich und aus Wasserstoff oder Hydrocarbyl mit 1 bis 20 Kohlenstoffatomen ausgewählt ist, und v+1 die Valenz von X ist.

3. Katalysatorkomponente nach Anspruch 1, wobei THI' an Position 2 mit dem gleichen Substituenten substituiert ist, der aus Methyl, tert-Butyl, Phenyl oder Napthyl ausgewählt ist.

4. Katalysatorkomponente nach Anspruch 1 oder 3, wobei beide THI" an Positionen 2 und 4 mit Substituenten substituiert sind, wobei die Substituenten aus zwei Methylen, zwei tert-Butylen, zwei Phenylen oder zwei Naphtylen ausgewählt sind.

5. Aktives Katalysatorsystem, umfassend die Katalysatorkomponente nach einem der Ansprüche 1 bis 4 und ein Aktivierungsmittel oder einen Aktivierungsträger.

6. Aktives Katalysatorsystem nach Anspruch 5, wobei es sich beim Aktivierungsmittel um Aluminoxan handelt.

7. Verfahren zum Herstellen eines aktiven Katalysatorsystems, umfassend die folgenden Schritte:

   a) Bereitstellen einer Katalysatorkomponente, umfassend die drei oder mehreren gebrückten bis- oder bis-Tetrahydro-Indenyl-Metallocen-Katalysatorkomponenten nach einem der Ansprüche 1 bis 4.
   b) Bereitstellen eines Aktivierungsmittels mit einer ionisierenden Wirkung oder eines Aktivierungsträgers.

8. Verfahren zum Homo- oder Copolymerisieren von Ethylen oder Alpha-Olefinen, das die folgenden Schritte umfasst:

   a) Injizieren des aktiven Katalysatorsystems nach Anspruch 5 oder 6 in den Reaktor;
   b) Injizieren eines Monomers und eines optionalen Comonomers in den Reaktor;
   c) Halten unter Polymerisationsbedingungen;
   d) Rückgewinnen eines Polymers.

9. Verfahren nach Anspruch 8, wobei es sich beim Monomer um Ethylen oder Propylen handelt.

10. Verwendung des Katalysatorsystems nach Anspruch 5 oder 6 zur Herstellung eines Polymers mit guten optischen und mechanischen Eigenschaften, das leicht zu verarbeiten ist.

**Revendications**

1. Composant de catalyseur comprenant trois composants bisindényl métallocène pontés ou plus qui sont structurellement légèrement différents en ce qu'ils ont des motifs de substitution différents et représentés par la formule I

$$R''(THI)_2MQ_2 + R''(THI')_2MQ_2 + R''(THI'')_2MQ_2 + \ldots \qquad (1)$$

dans laquelle THI représente un indényle ou tétrahydro-indényle, THI' représente un indényle ou tétrahydro-indényle monosubstitué, THI" représente un indényle ou tétrahydro-indényle di-substitué, R" est un pont structurel entre deux cycles cyclopendadiényle communicant une rigidité au composant, M est un métal du groupe 4 du tableau périodique (manuel de chimie, 76$^{eme}$ édition) et chaque Q est identique ou différent et peut être un radical hydrocarbyle ou hydrocarboxy comportant 1 à 20 atomes de carbone ou un atome d'halogène.

2. Composant de catalyseur selon la revendication 1, dans lequel chaque groupe substituant sur les indényles ou tétrahydro-indényles THI' et THI" est indépendamment choisi parmi ceux de formule $XR_v$ dans laquelle X est choisi parmi le groupe 14, l'oxygène et l'azote et chaque R est identique ou différent et est choisi parmi un atome d'hydrogène ou un groupe hydrocarbyle de 1 à 20 atomes de carbone et v+1 est la valence de X.

3. Composant de catalyseur selon la revendication 1, dans lequel les deux THI' sont substitués en position 2 par le même substituant choisi parmi les groupes méthyle, tert-butyle, phényle ou naphtyle.

4. Composant de catalyseur selon la revendication 1 ou la revendication 3, dans lequel les deux THI" sont substitués aux positions 2 et 4 par des substituants choisis parmi deux-méthyles, deux-tert-butyles, deux-phényles ou deux naphtyles.

5. Système de catalyseur actif comprenant le composant de catalyseur selon l'une quelconque des revendications 1 à 4, et un agent d'activation ou un support d'activation.

6. Système de catalyseur actif selon la revendication 5, dans lequel l'agent d'activation est un aluminoxane.

7. Procédé de préparation d'un système de catalyseur actif comprenant les étapes consistant à :

   a) fournir un composant de catalyseur comprenant les trois composants de catalyseur bis- ou bis-tétrahydro-indényl métallocène pontés ou plus selon l'une quelconque des revendications 1 à 4 ;
   b) fournir un agent d'activation ayant une action ionisante ou un support d'activation.

8. Procédé pour homo- ou co-polymériser l'éthylène ou des alpha-oléfines qui comprend les étapes consistant à :

   a) injecter le système de catalyseur actif de la revendication 5 ou de la revendication 6 dans le réacteur ;
   b) injecter un monomère et un comonomère facultatif dans le réacteur ;
   c) maintenir des conditions de polymérisation ;
   d) récupérer un polymère.

9. Procédé selon la revendication 8, dans lequel le monomère est l'éthylène ou le propylène.

10. Utilisation du système de catalyseur de la revendication 5 ou de la revendication 6, pour préparer un polymère ayant de bonnes propriétés optiques et mécaniques qui est facile à traiter.

FIGURE 1

FIGURE 2

FIGURE 3a

FIGURE 3b

FIGURE 3c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5714427 A
- EP 0619325 A
- EP 0645401 A
- EP 0427696 A
- EP 0277004 A

**Non-patent literature cited in the description**

- *J. Org. Chem.,* 1985, vol. 288, 63-67